# EUROPÄISCHE PATENTSCHRIFT

(11) **EP 0 309 851 B1**
(45) Veröffentlichungstag und Bekanntmachung des Hinweises auf die Patenterteilung: **16.02.1994**
(21) Anmeldenummer: 88115333.2
(22) Anmeldetag: 19.09.1988
(51) Int. Cl.: H04Q 3/545, H04Q 11/04, H04M 3/42, H04M 3/48

(54) **Verfahren zum Verbinden zweier Endgeräte auf Veranlassung eines dritten in einem digitalen Kommunikationssystem**
Procedure for connecting two terminals at the instigation of a third in a digital communiation system
Procédé pour connecter deux terminaux sous l'instigation d'un troisième dans un système de communication numérique

(30) Priorität: 28.09.1987 DE 3732681
(43) Veröffentlichungstag der Anmeldung: 05.04.1989
(73) Patentinhaber: SIEMENS AKTIENGESELLSCHAFT, 80333 München (DE)
(72) Erfinder: Muyssen, John, B-09050 Evergem (BE)

(56) Entgegenhaltungen:
- EP-A- 0 036 619
- EP-A- 0 187 945
- TELCOM REPORT, 1985, Sonderheft "ISDN IM BÜRO-HICOM", Seiten 67-75, Berlin, DE; G. OTT et al.: "HICOM-Software von heute für morgen"

## Beschreibung

Die Erfindung betrifft ein Verfahren zum Verbinden zweier Endgeräte auf Veranlassung eines dritten in einem digitalen Kommunikationssystem nach dem Oberbegriff des Patentanspruchs 1.

Es ist eine große Zahl von in Hinsicht auf die Art bzw. Zahl unterschiedlicher Endgeräte und die Art und Zahl unterschiedlichen Kommunikationsdienste unterscheidbaren digitalen Kommunikationssystemen bekannt. Abgesehen von der Art der eingesetzten Endgeräte und Kommunikationsdienste lassen sich solche digitalen Kommunikationssysteme auch bezüglich der eigentlichen Vermittlungsstruktur unterscheiden; es treten sowohl sogenannte zentrale Vermittlungen als auch dezentrale Vermittlungen auf. Teilweise ist die Art der Vermittlungsstruktur von der Art der verwendeten Endgeräte und Kommunikationsdienste abhängig. So werden z.B. dezentrale Vermittlungsstrukturen, die in den sogenannten 'local area networks' auftreten, häufig für Datenendgeräte verwendet, während für die Kommunikationsart Sprache vorwiegend zentrale Vermittlungsstrukturen verwendet werden.

Generell zeichnen sich derartige digitale Kommunikationssysteme dadurch aus, daß sie nicht nur zur eigentlichen Vermittlungssteuerung sondern auch zu einer Steuerung bzw. Realisierung zusätzlicher, über den eigentlichen Vermittlungsvorgang hinausgehender Steuervorgänge befähigt sind; solche zusätzlichen Funktionen werden im allgemeinen als Leistungsmerkmale bezeichnet, wobei insbesondere für den Kommunikationsdienst Sprache eine große Zahl unterschiedlichster Leistungsmerkmale bekannt ist. Zu solchen Leistungsmerkmalen zählen beispielsweise die Verhinderung unerwünschter Verbindungen, akustische Hinweise für wartende Teilnehmer, Sammelnachtschaltungen und eine selbsttätige Rufweiterleitung.

Bestimmte Leistungsmerkmale solcher digitalen Kommunikationssysteme sind von der Art und dem Funktionsumfang der verwendeten Endgeräte abhängig. So gilt beispielsweise für Fernsprechendgeräte, daß digitale Fernsprechendgeräte gegenüber analogen Fernsprechendgeräten - die über entsprechende Schnittstellen ebenfalls an digitale Kommunikationssysteme anschließbar sind - zusätzliche Leistungsmerkmale bieten können. So ist beispielsweise möglich, einen Anruf während eines Gesprächs entgegenzunehmen, die Benutzung eines Endgerätes von einer Identifikation durch eine Chipkarte abhängig zu machen oder einen elektronischen Briefkasten zu nutzen.

Sofern an das digitale Kommunikationssystem auch eine Datenverarbeitungsanlage - z.B. ein Personal Computer - angeschlossen ist, können für den Datenverkehr zwischen der Rechnersteuerung des Kommunikationssystems und der Datenverarbeitungsanlage unterschiedliche Datendienste eingerichtet sein, die es der Datenverarbeitungsanlage ermöglichen, mit einer Vielzahl der zentralen Einrichtungen des digitalen Kommunikationssystems zu kommunizieren, z.B. Kommandos zu übergeben und Daten zu übernehmen. Der Verbindungsweg - Datenkanal - kann dabei eine Stand- oder Wählverbindung sein. Neben anderen Datenkanal-Leistungsmerkmalen ist in diesem Zusammenhang auch der Datenservice "Gesteuerter Verbindungsaufbau" bekannt, der es gestattet, daß die Datenverarbeitungsanlage über den Datenkanal mittels entsprechender Programme Verbindungen zwischen internen oder zwischen internen und externen Terminals herstellt.

Auch für die Kommunikationsart Sprache ist ein Verbindungsaufbau bekannt, bei dem von einem Teilnehmer eine Verbindung zwischen einem zweiten und einem dritten Teilnehmer hergestellt wird. Dieses Leistungsmerkmal wird mit einer sogenannten assoziierten Wahl realisiert, die mit komplexen und verhältnismäßig aufwendigen leistungsmerkmalspezifischen Programmprozeduren verknüpft ist, die darüber hinaus auch Konsequenzen für die eigentlichen Vermittlungsprozeduren und einige Steuerprozeduren für andere Leistungsmerkmale haben.

Aus der EP-A-0 187 945 ist ein entsprechendes Kommunikationssystem, bestehend aus einer Datenverarbeitungsanlage und einer Fernsprechvermittlungsanlage bekannt, in dem ein Verfahren zum Verbinden zweier Endgeräte miteinander auf Veranlassung der Datenverarbeitungsanlage ausführbar ist, wobei hierzu die Datenverarbeitungsanlage einen entsprechenden Vermittlungsauftrag sowie die Rufnummern der zu verbindenden Endgeräte in die Fernsprechvermittlungsanlage eingibt.

Der Erfindung liegt die Aufgabe zugrunde, einen solchen gesteuerten Verbindungsaufbau zwischen zwei Teilnehmern durch einen dritten Teilnehmer ohne solche komplexen, aufwendigen und 'nebenwirkungsbehafteten' Steuerprozeduren zu schaffen. Die Erfindung geht dazu aus von einem digitalen Kommunikationssystem zur Verbindung von Endgeräten mit einer Rechnersteuerung, der eine Vermittlungssteuerung für die Realisierung von Vermittlungsprozeduren und weitere Programmsteuerungen für die Realisierung von Rückrufprozeduren und weiteren leistungsmerkmalspezifischen Steuerprozeduren sowie Speicher zur Aufnahme von Vermittlungsprozedur- und Leistungsmerkmalprozedur relevanten Steuerdaten zugeordnet sind. In Verbindung damit wird erfindungsgemäß vorgesehen, daß von wenigstens einem Endgerät, insbesondere einer angeschlossenen Datenverarbeitungsanlage, die Anschlußadressen zweier anderer miteinander zu verbindender Endgeräte derart eingebbar und von der zentralen Rechnersteuerung auswertbar sind, daß die Anschlußadressen der Programmsteuerung zur Realisierung von Rückrufprozeduren als die Adressen eines rufenden und eines rückrufenden Teilnehmers übergeben werden.

Als erfindungswesentlich ist anzusehen, daß bei der Realisierung des Leistungsmerkmals "gesteuerter Verbindungsaufbau" keine leistungsmerkmalspezifischen Steuerprozeduren in das digitale Kommunikationssystem implementiert sind, sondern daß dieses Leistungsmerkmal auf ein bekanntes anderes - im digitalen Kommunikationssystem vorhandenes - Leistungsmerkmal "Rückruf im Besetztfall" oder "automatischer Rückruf im Freifall" zurückgeführt ist. Diese Rückführung ist in zeitgemäßen digitalen Kommunikationssystemen insofern ohne Schwierigkeiten und Aufwand zu realisieren, als Rückrufaufträge mit den Adressen des vergeblich rufenden und des angerufenen Teilnehmers in einer entsprechenden Tabelle eines der der Rechnersteuerung des Kommunikationssystems zugeordneten Speicher abgelegt werden. Die kommunikationssysteminterne Steuerung des Leistungsmerkmals "gesteuerter Verbindungsaufbau" erfolgt also mit den für das Leistungsmerkmal "Rückruf" bereits implementierten Prozeduren.

Die Einleitung dieses gesteuerten Verbindungsaufbaus kann z.B. von einem digitalen Fernsprechendgerät mittels entsprechender Funktionstaste oder Kennzahlwahl und nachfolgender Eingabe der Teilnehmernummern der beiden miteinander zu verbindenden Endgeräte erfolgen. Im - in der Praxis häufiger auftretenden - Fall der Einleitung des gesteuerten Verbindungsaufbaus mittels einer Datenverarbeitungsanlage kann die Einleitung dieses Leistungsmerkmals gegebenenfalls nach Aufbau einer Datenleitung durch entsprechende definierte Befehle bzw. Meldungen vorgenommen werden. Praktische Einsatzfälle für dieses Leistungsmerkmal sind z.B. Hotelanlagen, in denen mittels einer Datenverarbeitungsanlage (DVA) zu bestimmten verabredeten Zeiten Weckansagen für Hotelgäste durchgeführt werden sollen. Die Datenverarbeitungsanlage aktiviert zu den vereinbarten Weckzeiten eine Rückrufverbindung, in der die Weckansageeinrichtung als Rückrufender behandelt wird.

Insbesondere für einen derartigen oder verwandten Anwendungsfall sieht eine Weiterbildung der Erfindung vor, daß die Programmsteuerung zur Realisierung von Rückrufprozeduren nach Durchschalten einer Rückrufverbindung die Abgabe eines Quittungssignals an das auftragseinleitende Endgerät initiiert.

Die Erfindung wird im folgenden anhand eines schematisch dargestellten Ausführungsbeispiels erläutert.

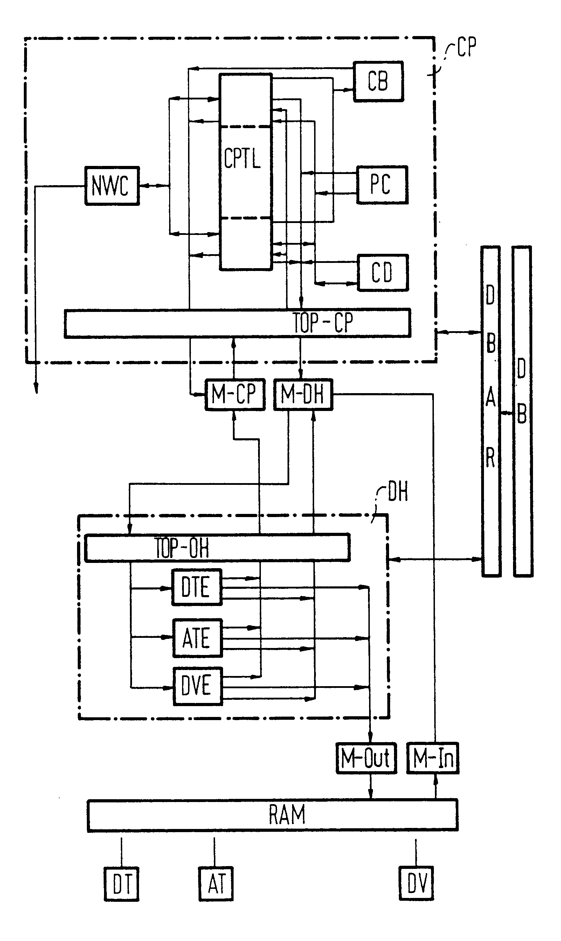

Die in der FIGUR dargestellte Steuerstruktur eines digitalen Kommunikationssystems hat einen modularen Charakter und weist zwei hierarchische Ebenen der Programmsteuerung auf, von denen in die der Peripherie nahe Leitungstechnik-Strukturebene DH den einzelnen Endgerätearten zugeordnete sogenannte Leitungstechnik-Programmodule DTE, ATE, DVE und in der anderen Vermittlungstechnik-Strukturebene CP (Call Processing) Teilmodule für unterschiedliche Teilaufgaben der Verbindungssteuerung vorgesehen sind. Der Übergang von der Peripherie in das eigentliche Kommunikationssystem wird durch einen oder mehrere nicht dargestellte Schnittstellen-Prozessoren gebildet, denen für die Aufnahme und Abgabe von Endgeräteanreizen und logischen Meldungen ein Schreib-Lesespeicher RAM zugeordnet ist. Die Übermittlung von Anreizen an die Leitungstechnik-Strukturebene DH (Device Handler), in der die einzelnen Leitungstechnik-Programmodule DTE, ATE, DVE einem Task-Organisationsprogramm TOP-DH untergeordnet sind, erfolgt über mailboxartig betriebene Übergabespeicher M-In, M-Out, die als integraler Bestandteil der Transportebene für Anreize und Einstelldaten aufzufassen sind. Die Transportebene ist ergänzt durch einen mailboxartig betriebenen Eingabe- und Ausgabespeicher M-DH, über den von der Leitungstechnik-Strukturebene DH Anreize vom Übergabespeicher M-In übernommen werden.

Der Übergabespeicher M-DH dient zugleich der Aufnahme logischer Meldungen von der Vermittlungstechnik-Strukturebene CP. In umgekehrter Richtung werden von der Leitungstechnik-Strukturebene DH Meldungen an einen weiteren Übergabespeicher M-CP abgegeben, der Teil der Transportebene zwischen den beiden Strukturebenen DH, CP ist.

Wesentlicher Bestandteil der Vermittlungstechnik-Strukturebene CP ist das neben anderen Modulen einem Task-Organisationsprogramm TOP-CP hierarchisch untergeordnete Vermittlungsprozedur-Programmodul CPTL (Call Processing Trunk Line), in dem durch gestrichelte Unterteilung zwei Teilmodule für Trunk- bzw. Linesteuerung angedeutet sind. Neben zwei - hier als willkürliche Beispiele anzusehenden - Programmodulen CD, PC, die einer Anrufumleitung (Call Distribution) bzw. der Personensuche (Paging Control) dienen, ist auch ein Leistungsmerkmal-Programmmodul CB (Call Back) zur Durchführung von Rückrufprozeduren vorgesehen.

Zu den Leistungsmerkmal-Programmodulen ist auch ein Netzwerksteuer-Programmodul NWC (Network Controler) zu zählen, mit dem die gesamte logische Verbindungsspeichersteuerung und Koppelfeldsteuerung realisiert wird.

Die von der Vermittlungstechnik-Strukturebene CP gesteuerten vermittlungstechnischen Vorgänge sind von der Art der miteinander zu verbindenden Endgeräte bzw. von der benutzten Kommunikationsart völlig unabhängig. Die Berücksichtigung der unterschiedlichen Kommunikationsdienste und Endgerätearten erfolgt lediglich in der Leitungstechnik-Strukturebene DH, in der die einzelnen Leitungstechnik-Programmodule DTE, ATE, DVE derartig strukturiert sind, daß sie jeweils die Steuerung des Signalisierungsverfahrens und der Benutzeroberfläche einer bestimmten Geräteart - digitale Endgeräte DT, analoge Fernsprechendgeräte AT und Datenendgeräte DV - beherrschen.

Die Übergabe von Meldungen vom Speicher RAM an die Leitungstechnikstrukturebene DH bzw. von dieser an die Vermittlungstechnik-Strukturebene CP bzw. die Übergabe von Meldungen in umgekehrten Richtungen erfolgt in einem definierten Meldungsformat, das prinzipiell derart aufgebaut ist, daß jeweils einem systemweit festgelegten Systemheader ein spezifischer Header folgt, der beim Meldungsverkehr zwischen zwei Strukturebenen je nach Übertragungsrichtung unterschiedlich ist. An diesen spezifischen Header schließt sich der eigentliche Datenteil an. Alle Meldungen werden in diesem Grundformat in einem Anwenderspeicher zusammengestellt.

Im Systemheader steht jeweils eine Identifizierungsnummer der die Meldung abgebenden Task, die durch eine Identifizierungsnummer des sendenden Programmoduls ergänzt ist; in den beiden anschließenden Datenfeldern werden entsprechende Identifizierungsnummern der Empfangstask bzw. des Empfangs-Programmoduls angegeben.

Der Aufbau des sich an den Systemheader anschließenden spezifichen Headers variiert zwar, umfaßt aber jeweils auch die Rufnummer des sendenden und des für den Empfang vorgesehenen Endgerätes. Im anschließenden Datenteil wird unter anderem die Rufnummer des - im Rahmen der Erfindung - für die Einleitung des Rückrufs vorgesehenen Endgerätes übertragen. Dem Programmmodul CB in der Vermittlungstechnik-Strukturebene CP stehen also beide für die Einleitung eines Rückrufs notwendigen Rufnummern zur Verfügung. Bei entsprechender Aktivierung wird das Programmodul vom Verbindungssteuerungs-Programmodul CPTL in Form eines Unterprogramms aufgerufen und über das Netzwerk-Programmodul NWC eine entsprechende Durchschaltung des Koppelfeldes veranlaßt.

## Patentansprüche

1. Verfahren zum Verbinden zweier Endgeräte miteinander auf Veranlassung eines von diesen unterschiedlichen auftragseinleitenden Endgerätes, insbesondere einer angeschlossenen Datenverarbeitungsanlage (DV) innerhalb eines digitalen Kommunikationssystemes zur Verbindung von Endgeräten mit einer Rechnersteuerung, der eine Vermittlungsprozedursteuerung (CPTL) für die Realisierung von Vermittlungsprozeduren und weitere Programmsteuerungen (CB,CD,PC) für die Realisierung von Rückrufprozeduren und weiteren leistungsmerkmalsspezifischen Steuerprozeduren sowie Speicher zur Aufnahme von vermittlungsprozedur- und leistungsmerkmalprozedurrelevanten Steuerdaten zugeordnet sind, **dadurch gekennzeichnet,** daß die Programmsteuerung (CB) zur Realisierung von Rückrufprozeduren von dem auftragseinleitenden Endgerät aktiviert wird, um eine Rückrufverbindung zwischen den beiden zu verbindenden Endgeräten zu erstellen, und daß hierzu die Anschlußadresse eines der miteinander zu verbindenden Endgeräte als die Adresse eines rufenden Teilnehmers und die Anschlußadresse des anderen zu verbindenden Endgerätes als die Adresse eines rückrufenden Teilnehmers mit Hilfe des auftragseinleitenden Endgerätes eingegeben und der Programmsteuerung zur Realisierung von Rückrufprozeduren übergeben werden.

2. Verfahren nach Anspruch 1, **dadurch gekennzeichnet,** daß die Programmsteuerung (CB) zur Realisierung von Rückrufprozeduren nach Durchschalten einer Rückrufverbindung die Abgabe eines Quittungssignals an das auftragseinleitende Endgerät (DV) initiiert.

## Claims

1. Method for connecting two terminals to one another at the instigation of a job-initiating terminal that is different therefrom, preferably of a connected data processing system (DV) within a digital communication system for connecting terminals with a processor control unit to which a switching procedure control unit (CPTL) for realizing switching procedures and further program control units (CB, CD, PC) for realizing callback procedures and further feature-specific control procedures as well as memories for storing switching procedure-related and feature procedure-related control data are assigned, characterized in that the program control unit (CB) for realizing callback procedures is activated by the job-initiating terminal in order to establish a callback connection between the two terminals to be connected, and in that for this purpose the connection address of one of the terminals to be connected to one another is entered as the address of a calling subscriber and the connection address of the other terminal to be connected is entered as the address of a calling back subscriber with the aid of the job-initiating terminal, and are passed on to the program control unit for realizing callback procedures.

2. Method according to Claim 1, characterized in that the program control unit (CB) for realizing callback procedures initiates the output of an acknowledgement signal to the job-initiating terminal (DV) after connecting through a callback connection.

## Revendications

1. Procédé pour connecter deux terminaux entre eux sur l'instigation d'un terminal différent des précédents et introduisant un ordre, notamment d'une installation raccordée de traitement de données (DV) à l'intérieur d'un système de communication numérique pour le raccordement de terminaux à une unité de commande à calculateur, à laquelle sont associées une unité de commande de procédures de commutation (CPTL) pour la réalisation de procédures de commutation, et d'autres unités de commande à programmes (CB, CD, PC) pour la réalisation de procédures de rappel et d'autres procédures de commande spécifiques aux caractéristiques potentielles, ainsi que des mémoires pour recevoir des données de commande concernant les procédures de commutation et les procédures de caractéristiques potentielles, caractérisé par le fait que l'unité de commande à programmes (CB) est activée, pour la réalisation de procédures de rappel, par le terminal introduisant l'ordre, de manière à établir une liaison de rappel entre les deux terminaux devant être connectés, et qu'à cet effet l'adresse de raccordement de l'un des terminaux devant être connectés entre eux est introduite en tant qu'adresse d'un abonné appelant et l'adresse de raccordement de l'autre terminal devant être connecté est introduite en tant qu'adresse d'un abonné rappelant, au moyen du terminal qui introduit l'ordre et que ces adresses sont transmises à l'unité de commande à programmes pour l'exécution de procédures de rappel.

2. Procédé suivant la revendication 1, caractérisé par le fait que pour la réalisation de procédure de programmes, après l'interconnexion d'une liaison de rappel, l'unité de commande à programmes (CB) déclenche l'envoi d'un signal d'accusé de réception au terminal (DV) qui introduit l'ordre.
